# EUROPEAN PATENT SPECIFICATION

(11) **EP 2 305 499 B1**
(45) Date of publication and mention of the grant of the patent: **20.06.2012**
(21) Application number: 10011303.4
(22) Date of filing: 28.09.2010
(51) Int. Cl.: B60H 3/02, B60H 3/00, B60H 1/00

(54) **Electrostatic atomizer for use in a motor vehicle**
Elektrostatische Einspritzdüse zur Verwendung in einem Kraftfahrzeug
Atomiseur électrostatique pour une utilisation dans un véhicule à moteur

(30) Priority: 30.09.2009 JP 2009228263
(43) Date of publication of application: 06.04.2011
(73) Proprietor: Panasonic Corporation, Osaka 571-8501 (JP)
(72) Inventor: Uegaki, Hidesato, Kadoma-shi, Osaka (JP); Matsumoto, Junichi, Kadoma-shi, Osaka (JP); Obata, Kenji, Kadoma-shi, Osaka (JP); Isaka, Atsushi, Kadoma-shi, Osaka (JP)
(74) Representative: Samson & Partner

(56) References cited:
- EP-A1- 2 050 602
- DE-A1-102008 018 397
- US-A1- 2006 222 672

## Description

### Field of the Invention

The present invention relates to an electrostatic atomizer arranged in a vehicle.

### Background of the Invention

In a vehicle such as a passenger car or the like, the vehicle room becomes a closed space. This poses a problem in that the odor of cigarettes or like materials stays within the vehicle room. In view of this, there are provided various kinds of filter-type air cleaning devices. However, the air cleaning devices are incapable of removing odor components adhering to the wall surfaces or the seats within the vehicle room.

Attention is paid to an electrostatic atomizer for electrostatically atomizing water to generate charged water particles of nanometer size (or a nanometer size mist). The charged water particles generated in the electrostatic atomizer contain radicals such as superoxide radicals or hydroxy radicals. Thus, the charged water particles are effective in removing odor components, sterilizing viruses and fungi, and deactivating allergen materials. When supplied into the vehicle room, therefore, the charged water particles are capable of removing the odor components existing in the air of the vehicle room and adhering to the wall surfaces or the seats within the vehicle room and also capable of deactivating the bodies of ticks adhering to the seats, the floor carpets or the cushions and the allergen materials such as pollen or the like introduced into the vehicle room when the doors are opened and closed or carried into the vehicle room by the clothes of a man.

Japanese Patent Application Publication No. 2006-151046 discloses an electrostatic atomizer for vehicles in which charged water particles are fed into the vehicle room together with the air stream generated by an air conditioning device of a vehicle.

In the conventional electrostatic atomizer of this kind, a discharge current is controlled to have a specified reference value.

As mentioned above, the charged water particles of nanometer size generated by the electrostatic atomization of the electrostatic atomizer contain radicals and have the functions of deactivating fungi or viruses, removing odor components and effectively improving the air quality. However, ozone is generated by air discharge during the electrostatic atomization. The ozone gives off an odor which may sometimes make a man feel unpleasant, although the degree of unpleasantness varies with the individual persons.

In general, the charged water particles and the ozone as a byproduct have such features that the quantity thereof is increased in proportion to the intensity of a discharge current while the concentration thereof is decreased in proportion to the distance from the generation portion. In case where the electrostatic atomizer is installed so that the charged water particles can be fed into the closed room of a vehicle, the concentration of the ozone as the source of an unpleasant odor grows higher near the outlet of the charged water particles.

In particular, the electrostatic atomizer for vehicles installed independently of the vehicle air conditioning device attachable later has no ability to dilute the ozone with the air stream used for air conditioning purposes. Thus, the odor of ozone makes a man feel unpleasant near the outlet thereof.

Document EP 2 050 602, which is considered as the closest prior art, discloses an electrostatic atomizer installed in a vehicle, with a control unit for controlling the high-voltage and the water supply.

### Summary of the Invention

In view of the above, the present invention provides an electrostatic atomizer capable of reducing the generation quantity of ozone and the ozone concentration near the outlet thereof so as not to make a man feel unpleasant with the odor of ozone, when the man exists near the outlet, and capable of increasing the generation quantity of charged water particles to thereby improve the air quality, when the man exists far away from the outlet.

In accordance with an aspect of the present invention, there is provided an electrostatic atomizer installed in a vehicle independently of a vehicle air conditioning device, including: a discharge electrode; a high-voltage applying unit for applying a high voltage to the discharge electrode; a water supply unit for supplying water to the discharge electrode; an outlet through which charged water particles and ozone generated by electrostatic atomization during application of the high voltage to the discharge electrode are fed into a vehicle room; a distance measuring unit for measuring the distance between the outlet and a human body to generate a detection signal; and a control unit for controlling the high-voltage applying unit and the water supply unit to thereby control a discharge current of the discharge electrode, wherein the control unit is configured to change the discharge current step by step or continuously in response to the detection signal of the distance measuring unit and to make the value of the discharge current supplied when the human body exits closer to the outlet smaller than the value of the discharge current supplied when the human body exits far away from the outlet.

With this configuration, the distance between the man (human body) getting on the vehicle and the electrostatic atomizer is measured by the distance measuring unit. In case where the human body exists closer to the outlet, the control unit controls the high-voltage applying unit and the water supply unit so that the discharge current value of the discharge electrode can become smaller. This reduces the generation quantity of the charged water particles and the ozone, thereby reducing the quantity of the ozone discharged from the outlet and the ozone concentration near the outlet. Accordingly, it is possible to prevent the man existing closer to the outlet from feeling unpleasant due to the odor of ozone. In contrast, if a man exists far away from the outlet, the control unit controls the high-voltage applying unit and the water supply unit so that the discharge current value of the discharge electrode can become greater. This increases the generation quantity of the charged water particles, which makes it possible to provide an effect of improving the air quality within the vehicle room. Although the generation quantity of the ozone is increased by the increase of the discharge current value, it is possible to keep the odor of ozone from making a man feel unpleasant because the human body exists far away from the outlet and because the ozone concentration is decreased in proportion to the distance between the outlet and the human body.

In accordance with another aspect of the present invention, there is provided an electrostatic atomizer installed in a vehicle independently of a vehicle air conditioning device, including: a discharge electrode; a high-voltage applying unit for applying a high voltage to the discharge electrode; a water supply unit for supplying water to the discharge electrode; an outlet through which charged water particles and ozone generated by electrostatic atomization during application of the high voltage to the discharge electrode are fed into a vehicle room; an in-vehicle illumination device for illuminating the interior of the vehicle; an operation switch for on/off controlling the in-vehicle illumination device and generating on/off signals; and a control unit for controlling the high-voltage applying unit and the water supply unit to thereby control a discharge current of the discharge electrode, wherein the control unit is configured to change the discharge current in response to the on/off signals of the operation switch and to make the value of the discharge current supplied when the operation switch is turned on smaller than the value of the discharge current supplied when the operation switch remains turned off.

In the vehicle, the in-vehicle illumination device often referred to as a reading lamp is usually turned on to read a map or a document within the vehicle room. In this case, the man getting, on the vehicle reads the map or the document in a position near the in-vehicle illumination device. Therefore, if the operation switch is turned on, it can be deemed that the man exists closer to the electrostatic atomizer having the in-vehicle illumination device and further that the distance between the outlet and the human body is short. The control unit controls the high-voltage applying unit and the water supply unit so that the discharge current value of the discharge electrode can become smaller. This reduces the generation quantity of the ozone as well as the generation quantity of the charged water particles, thereby reducing the quantity of the ozone discharged from the outlet and the ozone concentration near the outlet. Accordingly, it is possible to prevent the man existing closer to the in-vehicle illumination device of the electrostatic atomizer (namely, the man existing closer to the outlet) from feeling unpleasant due to the odor of ozone. In contrast, if the operation switch remains turned off, it is deemed that the man exists far away from the electrostatic atomizer having the in-vehicle illumination device. Thus, the control unit controls the high-voltage applying unit and the water supply unit so that the discharge current value of the discharge electrode can become greater. This increases the generation quantity of the charged water particles, which makes it possible to provide an effect of improving the air quality within the vehicle room. Although the generation quantity of the ozone is increased by the increase of the discharge current value, it is possible to keep the odor of ozone from making a man feel unpleasant because the human body exists far away from the outlet and because the ozone concentration is decreased in proportion to the distance between the outlet and the human body.

With the present invention set forth above, the value of the discharge current supplied when the human body exits closer to the outlet is controlled to become smaller than the value of the discharge current supplied when the human body exits far away from the outlet. In case where a man exists closer to the outlet, the generation quantity of the ozone is reduced to thereby the ozone concentration near the outlet. Accordingly, it is possible to prevent a man from feeling unpleasant due to the odor of ozone. If a man exists far away from the outlet, the discharge current value is increased to increase the generation quantity of the charged water particles, which makes it possible to provide an effect of improving the air quality within the vehicle room. Although the generation quantity of the ozone is increased by the increase of the discharge current value, it is possible to keep the odor of ozone from making a man feel unpleasant because the human body exists far away from the outlet and because the ozone concentration is decreased in proportion to the distance between the outlet and the human body.

### Brief Description of the Drawings

The objects and features of the present invention will become apparent from the following description of embodiments, given in conjunction with the accompanying drawings, in which:
Fig. 1 is a schematic section view showing an electrostatic atomizer for vehicles in accordance with one embodiment of the present invention, in which view the electrostatic atomizer is installed in a vehicle;
Fig. 2 is a schematic configuration view of the electrostatic atomizer shown in Fig. 1;
Fig. 3 is a graph representing the relationship between the discharge current value and the ozone quantity in the electrostatic atomizer;
Fig. 4 is a schematic perspective view showing an electrostatic atomizer for vehicles in accordance with another embodiment of the present invention, in which view the electrostatic atomizer is installed in a vehicle; and
Fig. 5 is a schematic configuration view of the electrostatic atomizer shown in Fig. 4.

### Detailed Description of the Preferred Embodiments

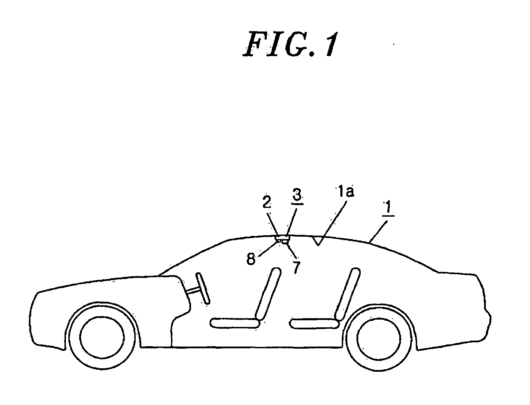

One embodiment of the present invention will now be described with reference to Figs. 1 through 3.

An electrostatic atomizer 3 for vehicles is installed in a vehicle 1 such as a passenger car or the like. The electrostatic atomizer 3 is arranged in the vehicle 1 independently of a vehicle air conditioning device (not shown) provided in the vehicle 1. In the embodiment shown in Fig. 1, the electrostatic atomizer 3 is installed in the ceiling 1a of the vehicle 1.

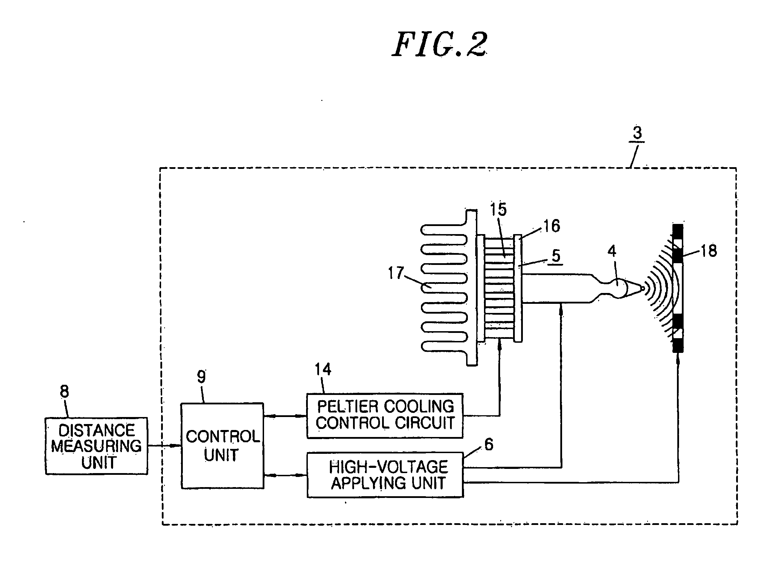

As shown in Fig. 2, the electrostatic atomizer 3 includes a discharge electrode 4 operating with a discharge current, a high-voltage applying unit 6 for applying a high voltage to the discharge electrode 4, a water supply unit 5 for supplying water to the discharge electrode 4, an outlet 7 (see Fig. 1) through which the charged water particles and the ozone generated by electrostatic atomization during application of the high voltage to the discharge electrode 4 are fed into the vehicle room, a distance measuring unit 8 for measuring the distance between the outlet 7 and the human body and a control unit 9 for controlling the high-voltage applying unit 6 and the water supply unit 5 to thereby control the discharge current of the discharge electrode 4.

In the embodiment shown in Fig. 2, the water supply unit 5 is configured to supply water to the discharge electrode 4 by cooling the moisture present in the air and generating dew condensation water through the use of a cooling unit such as a Peltier unit 15 or the like. This means that the cooling unit makes up the water supply unit 5 for supplying water to the discharge electrode 4.

The Peltier unit 15 includes an insulating pate made of alumina or aluminum nitride having high heat conductivity, a pair of Peltier circuit boards arranged on one surface of the insulating plate such that the circuits thereof face each other and a plurality of BiTe-based thermoelectric elements interposed between the Peltier circuit boards. The thermoelectric elements adjoining to each other are electrically connected to each other using the circuits thereof. The Peltier unit 15 is configured to ensure that heat can move from one of the Peltier circuit boards toward the other when an electric current is fed to the thermoelectric elements through a Peltier input lead line. A cooling part 16 is connected to the outer side of one of the Peltier circuit boards and a radiating part 17 is connected to the outer side of the other Peltier circuit board. In the present embodiment, radiator fins are used as the radiating part 19.

The rear end portion of the discharge electrode 4 is connected to the cooling part 16 of the Peltier unit 15. A ring-shaped opposite electrode 18 is arranged at the front side of the discharge electrode 4.

In the electrostatic atomizer 3, an electric current is fed to the Peltier unit 15, i.e., the water supply unit 5, to cool the cooling part 16. Upon cooling the cooling part 16, the discharge electrode 4 is cooled to condensate the moisture present in the air, as a result of which water (dew condensation water) is supplied to the tip end of the discharge electrode 4. In this state, the high-voltage applying unit 6 applies a high voltage to the water supplied to the tip end of the discharge electrode 4, whereby the level of the water supplied to the tip end of the discharge electrode 4 is partially built up in a conical shape by the application of the high voltage, consequently forming a Taylor cone. Electric charges are concentrated on the tip end of the Taylor cone thus formed. Thus, the intensity of electric fields becomes stronger at the tip end of the Taylor cone, thereby causing the Taylor cone to further grow up. If the Taylor cone grows up in this way and if the electric charges are concentrated on the tip end of the Taylor cone to increase the density thereof, the water present at the tip end of the Taylor cone is applied with a great deal of energy (namely, the repellant force of the electric charges having the increased density) and is subjected to repetitive division and scattering (Rayleigh division), thus generating a large quantity of negatively charged water particles of nanometer size. The charged water particles are fed into the vehicle room from the outlet 7 provided in a casing 2 defining the contour of the electrostatic atomizer 3. The charged water particles generated by electrostatic atomization contain radicals such as superoxide radicals or hydroxy radicals. Thus, the charged water particles are effective in removing odor components, sterilizing viruses and fungi, and deactivating allergen materials. Furthermore, the charged water particles are capable of deactivating the bodies of ticks adhering to the seats, the floor carpets or the cushions and the allergen materials such as pollen or the like introduced into the vehicle room when the doors are opened and closed or carried into the vehicle room by the clothes of a man.

Ozone is generated by air discharge when the charged water particles are produced by electrostatic atomization during the operation of the electrostatic atomizer 3. The ozone is fed from the outlet 7 into the vehicle room together with the charged water particles.

In the present embodiment, the electrostatic atomizer 3 includes the distance measuring unit 8 for measuring the distance between the outlet 7 and the man (or the human body) getting on the vehicle 1. As the distance measuring unit 8, use is made of, e.g., an infrared sensor. If a man exists in a detection area within the room of the vehicle 1, the infrared sensor detects the presence of the man. In this case, the detection output of the infrared sensor becomes greater as the man exists closer to the outlet 7 in the detection area. The detection output of the infrared sensor becomes smaller as the man exists far away from the outlet 7.

In the present invention, the control unit 9 is configured to change the discharge current step by step or continuously in response to the human detection signal issued from the distance measuring unit 8. The control unit 9 controls the discharge current so that the value of the discharge current supplied when the human body exits closer to the outlet 7 can become smaller than the value of the discharge current supplied when the human body exits far away from the outlet 7. In other words, the discharge current value is increased or decreased depending to the distance between the electrostatic atomizer 3, which is installed in the ceiling 1a of the vehicle 1, and the man.

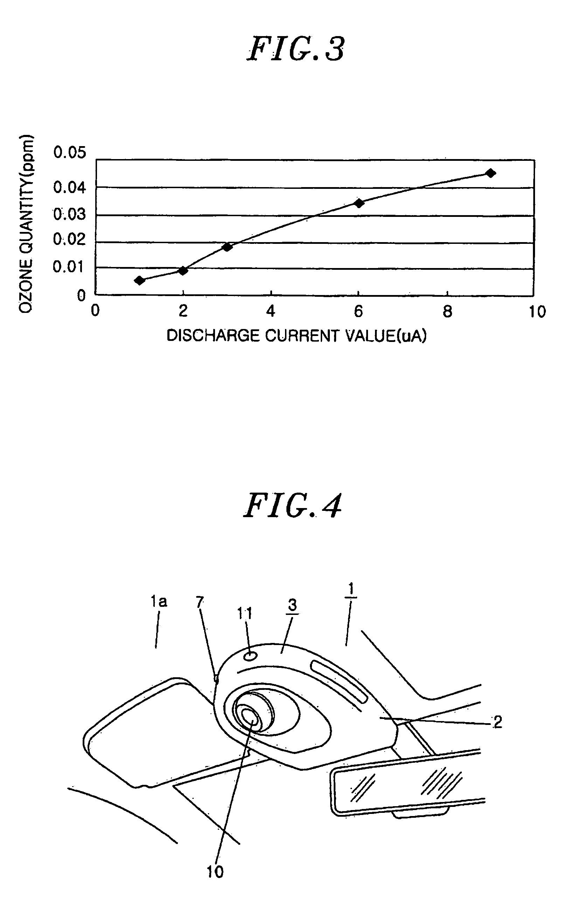

If a man gets on the vehicle 1, the distance between the man and the electrostatic atomizer 3 is measured by the infrared sensor, i.e., the distance measuring unit 8 of the electrostatic atomizer 3 installed in the ceiling 1a. In case where the man exists closer to the electrostatic atomizer 3, the detection output of the infrared sensor becomes greater. Responsive tb the detection signal of the infrared sensor, the control unit 9 controls the high-voltage applying unit 6 and the Peltier cooling control circuit 14 of the water supply unit 5 so that the discharge current value of the discharge electrode 4 can become smaller. This reduces the generation quantity of the charged water particles. As can be seen in Fig. 3, the generation quantity of the ozone is reduced if the discharge current value becomes smaller. Therefore, the ozone concentration near the outlet 7 is decreased, which prevents the man existing closer to the outlet 7 from feeling unpleasant due to the odor of ozone.

If a man exists far away from the electrostatic atomizer 3, the detection output of the infrared sensor becomes smaller. Responsive to the detection signal of the infrared sensor, the control unit 9 controls the high-voltage applying unit 6 and the Peltier cooling control circuit 14 of the water supply unit 5 so that the discharge current value of the discharge electrode 4 can become greater. This increases the generation quantity of the charged water particles, which makes it possible to provide an effect of improving the air quality within the vehicle room. Although the generation quantity of the ozone is increased by the increase of the discharge current value, it is possible to keep the odor of ozone from making a man feel unpleasant because the human body exists far away from the outlet 7 and because the ozone concentration is decreased in proportion to the distance between the outlet 7 and the human body.

In the present embodiment, the task of changing the discharge current with the control unit 9 in response to the human detection signal of the distance measuring unit 8 is performed as follows. Plural levels of threshold values (e.g., two levels of high and low threshold values) are preliminarily set as the human detection output values of the infrared sensor making up the distance measuring unit 8. If the detection output value is smaller than the low threshold value, the discharge current value is controlled to become high. If the detection output value is equal to or greater than the low threshold value and smaller than the high threshold value, the discharge current value is controlled to become middle. If the detection output value is equal to or greater than the high threshold value, the discharge current value is controlled to become low. Needless to say, a single threshold value may be used, if appropriate. As mentioned just above, the control unit 9 changes the discharge current step by step in response to the human detection signal of the distance measuring unit 8. Alternatively, it may be possible for the control unit 9 to change the discharge current continuously in response to the human detection signal of the distance measuring unit 8.

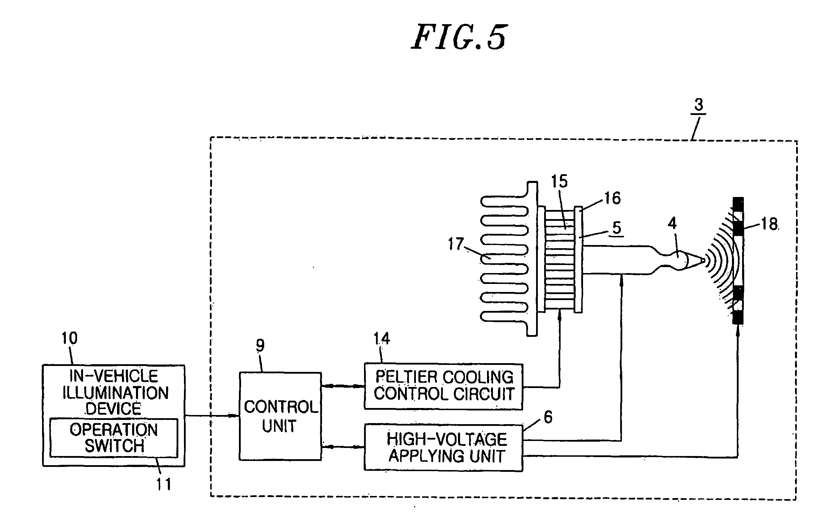

Next, another embodiment of the present invention will be described with reference to Figs. 4 and 5.

In the present embodiment, the same configurations as those of the foregoing embodiment will be omitted from description. Only the differing configurations will be described herein below.

The electrostatic atomizer 3 of the present embodiment includes a discharge electrode 4 operating with a discharge current, a high-voltage applying unit 6 for applying a high voltage to the discharge electrode 4, a water supply unit 5 for supplying water to the discharge electrode 4, an outlet 7 through which the charged water particles and the ozone generated by electrostatic atomization resulting from the application of a high voltage to the discharge electrode 4 are fed into the vehicle room, an in-vehicle illumination device 10 for illuminating the interior of a vehicle 1, an operation switch 11 for on/off controlling the in-vehicle illumination device 10 and a control unit 9 for controlling the high-voltage applying unit 6 and the Peltier cooling control circuit 14 of the water supply unit 5 to thereby control the discharge current of the discharge electrode 4.

In the embodiment shown in Fig. 4, the electrostatic atomizer 3 is provided in the front end portion of a ceiling 1a of the vehicle 1. The in-vehicle illumination device 10 is arranged on the lower surface of a casing 2 defining the contour of the electrostatic atomizer 3. The outlet 7 is formed on the rear surface (the surface facing the rear side of the vehicle 1) of the casing 2. The operation switch 11 for on/off controlling the in-vehicle illumination device 10 is arranged in the casing 2.

In the vehicle 1, the in-vehicle illumination device 10 often referred to as a reading lamp is usually turned on to read a map or a document within the vehicle room. In this case, the man getting on the vehicle 1 reads the map or the document in a position near the in-vehicle illumination device 10. Accordingly, if the operation switch 11 is turned on, it can be deemed that the man exists closer to the electrostatic atomizer 3 having the in-vehicle illumination device 10 and further that the distance between the outlet 7 and the human body is short. When the operation switch 11 remains turned off, it can be deemed that the man exists far away to the electrostatic atomizer 3 having the in-vehicle illumination device 10.

In the present embodiment, therefore, the control unit 9 changes the discharge current in response to the on/off signals of the operation switch 11 of the in-vehicle illumination device 10. If the operation switch 11 is turned on, the control unit 9 deems the man to exist closer to the outlet 7 of the electrostatic atomizer 3 and makes the value of the discharge current smaller than the value of the discharge current supplied when the operation switch 11 remains turned off (namely, when the man is deemed to exist far away from the outlet 7 of the electrostatic atomizer 3).

In case where the operation switch 11 is turned on to light the in-vehicle illumination device 10, the control unit 9 controls the high-voltage applying unit 6 and the Peltier cooling control circuit 14 of the water supply unit 5 in response to the on-signal of the operation switch 11 so that the discharge current value of the discharge electrode 4 can become smaller. This reduces the generation quantity of the ozone as well as the generation quantity of the charged water particles. Therefore, the ozone concentration near the outlet 7 is decreased, which prevents the man existing closer to the outlet 7 from feeling unpleasant due to the odor of ozone.

In contrast, if the operation switch 11 is turned off to extinguish the in-vehicle illumination device 10, the control unit 9 controls the high-voltage applying unit 6 and the Peltier cooling control circuit 14 of the water supply unit 5 in response to the off-signal of the operation switch 11 so that the discharge current value of the discharge electrode 4 can become greater. This increases the generation quantity of the charged water particles, which makes it possible to provide an effect of improving the air quality within the vehicle room. Although the generation quantity of the ozone is increased by the increase of the discharge current value, it is possible to keep the odor of ozone from making a man feel unpleasant because the human body exists far away from the outlet 7 and because the ozone concentration is decreased in proportion to the distance between the outlet 7 and the human body.

While the electrostatic atomizer 3 for vehicles is installed in the ceiling 1a of the vehicle 1 according to the foregoing embodiments, the present invention is not limited thereto. The electrostatic atomizer 3 may be installed in any arbitrary position within the vehicle room.

Since the electrostatic atomizer 3 is installed in the vehicle 1 independently of the air conditioning device of the vehicle 1, it may be possible to arrange the electrostatic atomizer 3 in the rear portion of the vehicle room.

While the opposite electrode 18 is employed in the foregoing embodiments, it may be possible to omit the opposite electrode 18.

While the invention has been shown and described with respect to the embodiments, it will be understood by those skilled in the art that various changes and modifications may be made without departing from the scope of the invention as defined in the following claims.

## Claims

1. An electrostatic atomizer (3) installed in a vehicle (1), comprising:
a discharge electrode (4);
a high-voltage applying unit (6) for applying a high voltage to the discharge electrode (4);
a water supply unit (5) for supplying water to the discharge electrode (4);
an outlet (7) through which charged water particles and ozone generated by electrostatic atomization during application of the high voltage to the discharge electrode (4) are fed into a vehicle room; a control unit (9) for controlling the high-voltage applying unit (6) and the water supply unit (5) to thereby control a discharge current of the discharge electrode (4), **characterized by** further comprising
a distance measuring unit (8) for measuring the distance between the outlet (7) and a human body to generate a detection signal;
wherein the control unit (9) is configured to change the discharge current step by step or continuously in response to the detection signal of the distance measuring unit (8) and to make the value of the discharge current supplied when the human body exits closer to the outlet smaller than the value of the discharge current supplied when the human body exits far away from the outlet.

2. An electrostatic atomizer (3) installed in a vehicle (1), comprising:
a discharge electrode (4);
a high-voltage applying unit (6) for applying a high voltage to the discharge electrode (4);
a water supply unit (5) for supplying water to the discharge electrode (4);
an outlet (7) through which charged water particles and ozone generated by electrostatic atomization during application of the high voltage to the discharge electrode (4) are fed into a vehicle room; a control unit (9) for controlling the high-voltage applying unit (6) and the water supply unit (5) to thereby control a discharge current of the discharge electrode (4), **characterized by** further comprising:
an in-vehicle illumination device (10) for illuminating the interior of the vehicle;
an operation switch (11) for on/off controlling the in-vehicle illumination device (10) and generating on/off signals;
wherein the control unit (9) is configured to change the discharge current in response to the on/off signals of the operation switch (11) and to make the value of the discharge current supplied when the operation switch (11) is turned on smaller than the value of the discharge current supplied when the operation switch (11) remains turned off.

## Patentansprüche

1. Elektrostatischer Zerstäuber (3), der in einem Fahrzeug (1) montiert ist, umfassend:
eine Entladeelektrode (4),
eine Hochspannungs-Anwendungseinheit (6) zum Anwenden einer Hochspannung auf die Entladeelektrode (4),
eine Wasser-Zuführeinheit (5) zum Zuführen von Wasser zu der Entladeelektrode (4),
einen Auslass (7), durch den geladene Wasserpartikel und Ozon, die über die elektrostatische Zerstäubung während der Anwendung der Hochspannung auf die Entladeelektrode (4) erzeugt werden, in einen Fahrzeugraum zugeführt werden,
eine Steuereinheit (9) zum Steuern der Hochspannungs-Anwendungseinheit (6) und der Wasser-Zuführeinheit (5), um **dadurch** einen Entladungsstrom von der Entladeelektrode (4) zu steuern, **gekennzeichnet** über ein Weiterumfassen:
einer Entfernungsmesseinheit (8) zum Messen der Entfernung zwischen dem Auslass (7) und einem menschlichen Körper, um ein Erfassungssignal zu erzeugen,
wobei, die Steuereinheit (9) ausgelegt ist, den Entladungsstrom stufenweise oder kontinuierlich in Reaktion auf das Erfassungssignal der Entfernungsmesseinheit (8) zu verändern, und, um den Wert des Entladungsstroms, der zugeführt wird, wenn sich der menschliche Körper näher zu dem Auslass befindet, geringer zu machen als den Wert des Entladungsstrom, der zugeführt wird, wenn sich der menschliche Körper weiter weg von dem Auslass befindet.

2. Elektrostatischer Zerstäuber (3), der in einem Fahrzeug (1) montiert ist, umfassend:
eine Entladeelektrode (4),
eine Hochspannungs-Anwendungseinheit (6) zum Anwenden einer Hochspannung auf die Entladeelektrode (4),
eine Wasserzuführeinheit (5) zum Zuführen von Wasser zu der Entladeelektrode (4),
einen Auslass (7), durch den geladene Wasserpartikel und Ozon, die über die elektrostatische Zerstäubung während der Anwendung der Hochspannung auf die Entladeelektrode (4) erzeugt werden, in einen Fahrzeugraum zugeführt werden,
eine Steuereinheit (9) zum Steuern der Hochspannungs-Anwendungseinheit (6) und der Wasser-Zuführeinheit (5), um **dadurch** einen Entladungsstrom von der Entladeelektrode (4) zu steuern,
**gekennzeichnet** über ein Weiterumfassen:
einer im Fahrzeug angeordnete Beleuchtungsvorrichtung (10) zum Beleuchten des Innenraums des Fahrzeugs,
eines Betriebsschalters (11) für ein An/Aus-Steuern der im Fahrzeug angeordneten Beleuchtungsvorrichtung (10) und zum Erzeugen von An/Aus-Signalen,
wobei die Steuereinheit (9) dazu ausgelegt ist, den Entladungsstrom in Reaktion auf die An-/Aus-Signale von dem Betriebsschalter (11) zu verändern, und, um den Wert des Entladungsstrom, der von dem Betriebsschalter (11) zugeführt wird, wenn der Betriebsschalter (11) angeschaltet ist, geringer zu machen, als den Wert des Entladungsstroms, der zugeführt wird, wenn der Betriebsschalter (11) ausgeschaltet bleibt.

## Revendications

1. Atomiseur électrostatique (3) installé dans un véhicule (1), comprenant :
une électrode de décharge (4) ;
une unité d'application de haute tension (6) destinée à appliquer une haute tension à l'électrode de décharge (4) ;
une unité d'alimentation en eau (5) destinée à fournir de l'eau à l'électrode de décharge (4) ;
un orifice de sortie (7) à travers lequel les particules d'eau chargées et l'ozone généré par atomisation électrostatique pendant l'application de la haute tension à l'électrode de décharge (4) sont fournis dans un compartiment du véhicule ;
une unité de contrôle (9) destinée à contrôler l'unité d'application de haute tension (6) et l'unité d'alimentation en eau (5) pour contrôler ainsi un courant de décharge de l'électrode de décharge (4),
**caractérisé en ce qu'**il comprend en outre
une unité de mesure de distance (8) destinée à mesurer la distance entre l'orifice de sortie (7) et un corps humain pour générer un signal de détection ;
dans lequel l'unité de contrôle (9) est configurée pour modifier le courant de décharge palier par palier ou de façon continue en réponse au signal de détection de l'unité de mesure de distance (8) et pour rendre la valeur du courant de décharge fourni lorsque la personne sort plus près de l'orifice de sortie inférieure à la valeur du courant de décharge fourni lorsque le corps humain sort loin de l'orifice de sortie.

2. Atomiseur électrostatique (3) installé dans un véhicule (1), comprenant :
une électrode de décharge (4) ;
une unité d'application de haute tension (6) destinée à appliquer une haute tension à l'électrode de décharge (4) ;
une unité d'alimentation en eau (5) destinée à fournir de l'eau à l'électrode de décharge (4) ;
un orifice de sortie (7) à travers lequel les particules d'eau chargées et l'ozone généré par atomisation électrostatique pendant l'application de la haute tension à l'électrode de décharge (4) sont fournis dans un compartiment de véhicule ;
une unité de contrôle (9) destinée à contrôler l'unité d'application de haute tension (6) et l'unité d'alimentation en eau (5) pour contrôler ainsi un courant de décharge de l'électrode de décharge (4) ;
**caractérisé en ce qu'**il comprend en outre :
un dispositif d'éclairage de l'intérieur du véhicule (10) destiné à éclairer l'intérieur du véhicule ;
un interrupteur (11) destiné à contrôler l'allumage/l'extinction du dispositif d'éclairage de l'intérieur du véhicule (10) et à générer des signaux d'allumage/extinction ;
dans lequel l'unité de commande (9) est configurée pour modifier le courant de décharge en réponse aux signaux d'allumage/extinction de l'interrupteur (11) et pour rendre la valeur du courant de décharge fourni lorsque l'interrupteur (11) est allumé inférieure à la valeur du courant de décharge fourni lorsque l'interrupteur (11) reste éteint.
